Europäisches Patentamt

European Patent Office

Office européen des brevets

(11) Numéro de publication: **0 346 217**
**A1**

## (12) DEMANDE DE BREVET EUROPEEN

(21) Numéro de dépôt: **89401564.3**

(22) Date de dépôt: **06.06.89**

(51) Int. Cl.4: **A 23 J 1/00**

(30) Priorité: **07.06.88 FR 8807561**

(43) Date de publication de la demande:
**13.12.89 Bulletin 89/50**

(84) Etats contractants désignés:
**AT BE CH DE ES GB GR IT LI LU NL SE**

(71) Demandeur: **FONDATION NATIONALE DE
TRANSFUSION SANGUINE
6, rue Alexandre Cabanel
F-75739 Paris Cédex 15 (FR)**

(72) Inventeur: **Leberre, Catherine
52bis Chemin de l'Ecu
F-91290 Lanorville (FR)**

**Faure, Alain
45bis Rue des Casseaux
F-91140 Villebon sur Yvette (FR)**

**Baudoin, Gille
19 Rue de Versailles
F-78150 Le Chesnay (FR)**

**Roche, Brigitte
48 Rue Bargue
F-75015 Paris (FR)**

**Colinart, Pierre
8 Rue des Coquarts
F-92220 Bagneux (FR)**

**Renon, Henri
10 Avenue Arouet
F-92320 Sceaux (FR)**

(74) Mandataire: **Bruder, Michel
10 rue de la Pépinière
F-75008 Paris (FR)**

(54) Procédé et installation de fractionnement en continu de protéines végétales, animales ou humaines.

(57) Pour fractionner des protéines on met en contact une solution de protéines avec un agent précipitant généralement constitué par un acide gras.

Pour permettre un fractionnement des protéines en continu on utilise une installation comprenant un dispositif (12) de mise en contact continu de la solution de protéines et de l'acide gras, ce dispositif (12) comportant une chambre de mélange (12a) de volume faible par rapport aux débits de la solution de protéines et d'acide gras, chambre dans laquelle est créée une forte agitation et une chambre de maturation (12b) reliée à la sortie de la chambre de mélange (12a), un étage de séparation solide/liquide (17), un étage (22) de concentration, par ultrafiltration, du liquide sortant de l'étage de séparation (17), et un dispositif de commande (47).

Fig. 1

EP 0 346 217 A1

**Description**

La présente invention concerne un procédé et une installation de fractionnement en continu de protéines végé tales, animales ou humaines permettant d'obtenir des protéines purifiées et concentrées.

Les techniques industrielles de fractionnement des protéines les plus utilisées reposant sur une précipitation sélective des protéines par mise en contact d'une solution de protéines avec un agent précipitant et en jouant sur les conditions de pH de force ionique. la nature et la concentration des agents précipitants. Parmi les agents précipitants qui ont été essayés à cet effet, on peut citer les acides gras comprenant de 6 à 14 atomes de carbone et en particulier l'acide caprylique qui présente l'avantage de permettre une séparation à température ambiante et d'être un agent stabilisant de nombreuses protéines.

On connaît déjà, ainsi qu'il est décrit dans le document PREPARATIVE BIOCHEMISTRY, vol. 14, no. 1, 1984, pages 1-17, Marcel Dekker, Inc.; A.F.S.A.HABEEB et al.; "Preparation of human immunoglobulin by caprylic acid precipitation", un procédé de purification des immunoglobulines par précipitation de plasma à l'acide caprylique, suivie par une étape de chromatographie. Ce procédé est un procédé du type "batch" ce qui signifie que le rapport acide caprylique/protéine qui permet d'obtenir la précipitation désirée n'est atteint qu'à la fin de l'addition de l'acide caprylique dans tous le lot de plasma. L'acide caprylique est ajouté sous agitation violente qui est fournie par un moyen mécanique. La suspension obtenue est centrifugée et filtrée si nécessaire pour enlever les fines particules. Un tel procédé, du fait de sa conception de base, ne se prête évidemment pas à une utilisation au plan industriel.

La présente invention concerne des perfectionnements apportés à un tel procédé de manière à permettre sa mise en oeuvre d'une manière continue. avec un rendement élevé.

A cet effet ce procédé de fractionnement en continu de protéines végétales. animales ou humaines par précipitation sélective des protéines résultant de la mise en contact d'une solution de protéines avec un agent précipitant constitué par un acide gras de 6 à 14 atomes de carbone, tel que l'acide caprylique, est caractérisé en ce qu'on met en contact, d'une manière continue, des débits respectifs d'acide gras et de la solution de protéines dans une chambre de mélange de volume faible par rapport aux débits, en créant une forte agitation dans cette chambre de mélange, on ajuste les débits individuels d'acide gras et de solution de protéines à pH et température contrôlés de manière à maintenir leur rapport égal à une valeur prédéterminée, on laisse le mélange évoluer ensuite pendant une phase de maturation de manière à former une suspension, on sépare cette suspension en une partie liquide dont on extrait les protéines restées solubles, et en une partie solide contenant des protéines de nature différente, et on contrôle en permanence les paramètres intervenant dans le procédé, tels que le débit, la pression, la température, le pH, la résistivité.

L'invention a également pour objet une installation mettant en oeuvre le procédé de fractionnement en continu susmentionné.

On décrira ci-après, à titre d'exemple non limitatif, une forme d'exécution de la présente invention, en référence au dessin annexé sur lequel :

La figure 1 est un schéma synoptique d'une installation mettant en oeuvre le procédé de fractionnement en continu de protéines suivant l'invention.

La figure 2 est une vue en coupe horizontale d'un hydroclone utilisé comme dispositif de mise en contact dans l'installation suivant l'invention.

La figure 3 est une vue en coupe axiale et verticale de l'hydroclone de la figure 2.

La figure 4 est un diagramme illustrant la variation du pourcentage de l'albumine précipitée à partir d'un plasma sanguin, en fonction du temps.

Les figures 5,6 et 7 sont des diagrammes illustrant l'influence de la teneur en acide caprylique sur la sélectivité de la précipitation à l'égard des protéines.

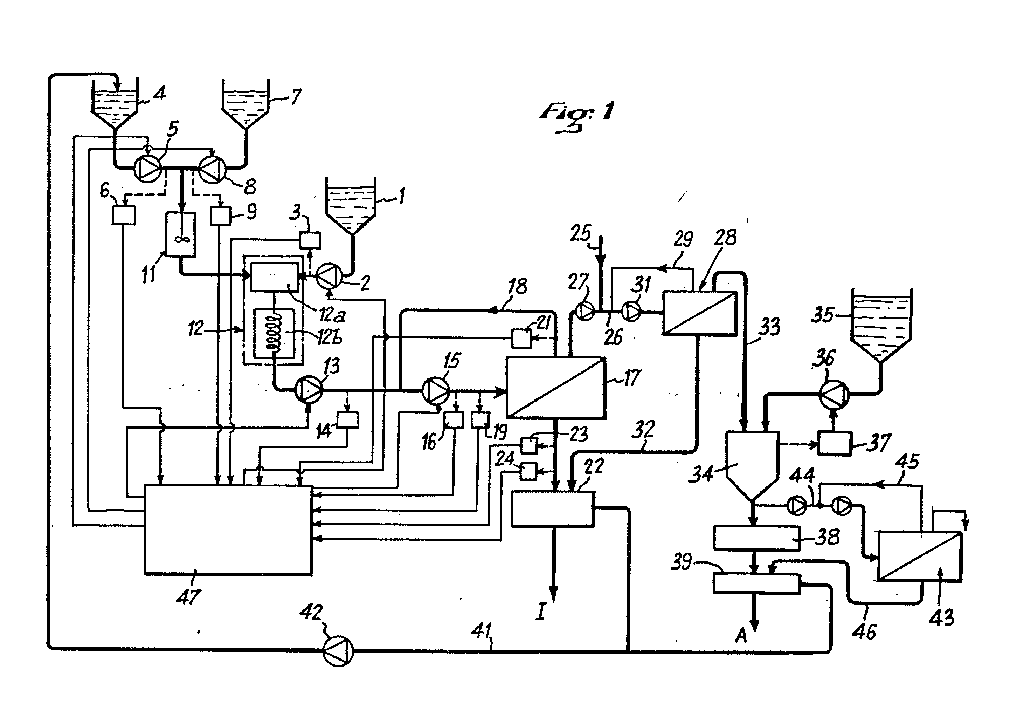

Le procédé de fractionnement de protéines suivant l'invention est mis en oeuvre au moyen d'une installation telle que représentée schématiquement sur la figure 1 et il sera décrit principalement, à titre d'exemple non limitatif, dans le cas d'une application au fractionnement de protéines plasmatiques. Le plasma contenant les protéines devant être fractionnées est contenu dans un récipient 1 et il est soutiré de ce récipient au moyen d'une pompe 2 dont le débit est contrôlé par un capteur de débit 3. La matière première, qui peut être constituée par un plasma humain débarrassé des facteurs de coagulation par cryoprécipitation, est de préférence diluée au tiers avec un tampon acétate 0,06M ayant un pH de 4,8.

L'acide gras qui est utilisé en tant qu'agent précipitant, est contenu dans un récipient 4 dont il est soutiré par une pompe 5, le débit de cette pompe étant controlé par un capteur de débit 6. L'acide gras peut être préalablement dispersé dans un tampon acétate 0,06M de pH 4,8, lequel est contenu dans un récipient 7. Ce tampon est soutiré par une pompe 8 dont le débit est contrôlé par un capteur de débit 9. Les débits d'acide gras et de tampon acétate sont introduits dans un homogénéiseur 11 qui fournit à sa sortie une émulsion de l'acide gras dans le tampon acétate. L'émulsion d'acide gras et le plasma sont mis en contact, en continu, dans un dispositif 12 lequel comporte une chambre de mélange 12a de volume faible par rapport aux débits de la solution de protéines plasmatiques et d'agent précipitant, chambre dans laquelle est créée une forte agitation favorisant la mise en contact, et une chambre de maturation 12b dans laquelle séjourne, pendant un temps prédéterminé, le mélange intime de solution de protéines plasmatiques et d'agent précipitant. La mise en contact et la maturation subséquente provoquent la précipitation pratiquement instantanée de certaines protéines du plasma, notamment de l'albumine, avec un rendement de 100% de celle-ci. Les autres protéines à savoir les immunoglobulines restent en solution.

La suspension sortant de la chambre de maturation 12b est ensuite transmise, par un circuit comprenant une pompe 13 dont le débit est contrôlé par un capteur de débit 14 à l'entrée d'un étage de séparation 17 qui peut être constitué par une centrifugeuse ou une unité de microfiltration. A titre d'exemple cette unité de microfiltration peut être constituée d'une pompe de recirculation 15 dont le débit est contrôlé par un capteur de débit 16. Le débit entrant dans le filtre 17 est la somme des débits provenant de la pompe 13 et d'une boucle de recirculation 18. Des capteurs de pression 19 et 21 sont prévus pour relever les pressions respectivement à l'entrée de l'unité de microfiltration 17 et dans la boucle de recirculation 18. L'unité de microfiltration 17 assure la séparation de la suspension qui entre en continu, en un filtrat et un rétentat.

Le filtrat est transmis à un étage 22 de concentration par ultrafiltration. Cet étage fournit à sa sortie les immunoglobulines I. La pression et le débit à l'entrée dans l'étage de concentration 22 sont respectivement contrôlés par des capteurs 23 et 24.

Le rétentat sortant de l'unité de microfiltration 17 peut être additionné d'un liquide de lavage dont la composition est choisie, de manière à ne provoquer aucune modification de la quantité et de la composition du précipité. Dans le cas de l'exemple présentement décrit ce liquide de lavage est constitué d'un tampon acétate de sodium 0,06M en acétate de pH4,8, saturé en acide caprylique. Le liquide de lavage est introduit par une canalisation 25 raccordé à une canalisation 26 sur laquelle est branchée une pompe 27 et qui s'étend entre la sortie du rétentat de l'unité de microfiltration 17 et l'entrée d'une autre unité de microfiltration 28. Cette unité de microfiltration 28 est à son tour pourvue d'une boucle de recirculation 29 comportant une pompe de recirculation 31. A cette unité de microfiltration 28 sont associés des capteurs de débit et de pression non représentés, semblables à ceux illustrés à propos de la première unité de microfiltration 17. La deuxième unité de microfiltration 28 assure ainsi le traitement du rétentat provenant de la première unité de microfiltration 17 et la séparation de celui-ci en un filtrat qui est transmis à l'étage de concentration 22, par l'intermédiaire d'une canalisation 32, et un nouveau rétentat. Cette opération peut être répétée plusieurs fois si nécessaire.

Le rétentat sortant du dernier étage de lavage, illustré par l'unité de microfiltration 28, est transmis à un solubiliseur 34 dans lequel est également introduit un milieu solubilisateur contenu dans un récipient 35. Le milieu solubilisateur est pompé dans le solubiliseur 34 par une pompe 36 de débit variable en fonction de données mesu rées par un capteur 37. Le milieu solubilisateur est choisi soit pour solubiliser la totalité du précipité soit pour produire un précipité de composition différente. Dans le premier cas la solution sortant du solubiliseur 34 est transmise à un étage de clarification 38 puis à un étage 39 de concentration par ultrafiltration. Cet étage de concentration 39 délivre à sa sortie de l'albumine concentrée A. Le réactif, c'est-à-dire l'acide gras, est récupéré à partir des deux étages de concentration 22 et 39 et il est transmis, par une canalisation 41 sur laquelle est branchée une pompe 42, au récipient 4 contenant l'acide gras, afin d'être recyclé.

Dans le cas où la solubilisation conduit à un précipité de composition différente il est possible de récupérer ce précipité par passage dans une autre unité de microfiltration 43, avec ou sans lavage. A cet effet la sortie du solubiliseur 34 est reliée, par une canalisation 44, à l'entrée de l'unité de microfiltration 43 qui est pourvue d'une boucle de recirculation 45 et la sortie du filtrat de l'unité 43 est reliée par une canalisation 46 à l'étage de concentration 39.

L'ensemble de l'installation est piloté par un dispositif de commande 47, qui reçoit des informations relatives aux divers paramètres mis en oeuvre dans le procédé suivant l'invention, en provenance des différents capteurs tels que les capteurs de débit 6,9,14,16,23, les capteurs de pression 19,21,24, ainsi que d'autres capteurs non repré sentés tels que des capteurs de température, de pH de ré sistivité, et qui commande en conséquence les diverses pompes assurant la mise en circulation des différents flux liquides de manière à maintenir toujours la même proportion des débits élémentaires. On peut ainsi réaliser un fractionnement en continu des différentes protéines à savoir des immunoglobulines I et de l'albumine A contenues dans le plasma introduit dans le récipient 7.

Comme il a été dit précédemment la séparation des protéines peut aussi être effectuée au moyen d'une centrifugeuse, à la place de l'unité de microfiltration 17, don nant un surnageant et un précipité traités ensuite séparément.

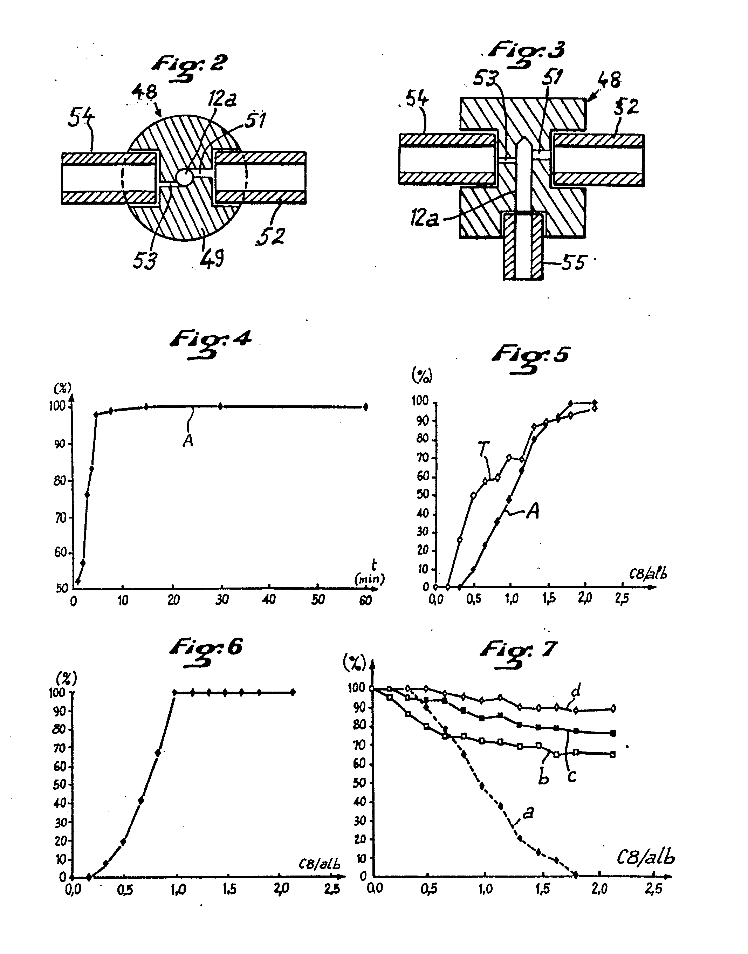

La chambre de mélange 12a peut etre avantageusement celle d'un hydroclone 48 tel que représenté sur les figures 2 et 3. Cet hydroclone comprend un corps 49 dans la partie centrale duquel est ménagée la chambre de mélange verticale 12a de forme cylindrique et de petit diamètre. Dans la partie supérieure de la chambre de mélange cylindrique 12a débouchent tangentiellement deux orifices d'entrée opposés à savoir un orifice d'entrée 51 pour la solution de protéines plasmatiques, lequel communique avec un raccord d'entrée 52 relié à la canalisation d'alimentation en solution de protéines venant du récipient 1, et un orifice d'entrée 53 pour l'agent précipitant, lequel communique avec un raccord 54 relié à l'homogénéiseur 11. Les diamètres des orifices 51 et 53 choisis en fonction des débits respectifs de solu tion de protéines plasmatiques et d'agent précipitant qui doivent etre introduits dans la chambre de mélange 12a. Dans le cas présent le diamètre de l'orifice d'entrée 51 de la solution de protéines plasmatiques est supérieur au diamètre de l'orifice 53 d'entrée de l'agent précipitant. Le rapport entre les débits d'agent précipitant et de solution de protéines plasmatiques est inférieur à l'unité et est maintenu à une valeur prédéterminée, ce rapport étant par exemple de 0 048. Le maintien de ce rapport des débits à une valeur constante est assuré par le dispositif de commande 47 agissant sur les pompes doseuses.

Les débits de solution de protéines plasmatiques et d'agent précipitant sont introduits tangentiellement dans la chambre de mélange verticale 12a de faible volume et ils s'écoulent vers le bas,en suivant un mouvement tourbillonnaire qui favorise le contact entre les deux liquides. A sa partie inférieure la chambre de mélange 12a communique avec un raccord de sortie 55 qui est relié à la chambre de maturation 12b.

On décrira maintenant quelques exemples de mise en oeuvre du procédé et de l'installation de précipitation suivant l'invention, dans le cas de différentes solutions protéiques comprenant un plasma humain et des solutions de protéines végétales.

On considèrera tout d'abord le cas du plasma humain dont les protéines sont précipitées par un acide gras. A un volume de plasma préalablement dilué à 20g/l en albumine et ajusté à un pH de 4,8 on ajoute, par l'intermédiaire de l'hydroclone 48, un volume d'émulsion d'acide gras dispersé Par suite de ce contact entre l'émulsion d'acide gras et la solution de protéines on précipite rapidement l'albumine du plasma, en moins de 5 minutes comme le montre la courbe A représentée sur la figure 4. Sur le diagramme de cette fi gure le pourcentage d'albumine précipitée A est porté en ordonnée tandis que le temps t est indiqué en abscisse, en minutes. L'essai a été effectué à une température de 20°C et avec un rapport pondéral c8/alb =2,2. La mise en contact de la solution de protéines plasmatiques et de l'acide gras a été de quelques centièmes de seconde dans la chambre de mélange 12a de l'hydroclone 48 et pour le reste du temps ce contact a été maintenu dans la chambre de maturation suivante 12b.

Les diagrammes des figures 5,6,7 illustrent l'influence de la teneur en acide caprylique sur la sélectivité de la précipitation. En effet suivant la quantité d'acide caprylique ajoutée on précipite sélectivement certaines protéines. Le diagramme de la figure 5 illustre la variation du pourcentage d'albumine (courbe A) et de transferrine (courbe T) précipitées, indiqué en ordonnée, en fonction du rapport en poids c8/alb entre l'acide caprylique et l'albumine, indiqué en abscisse. On voit d'après ce diagramme qu'un rapport de 2,2 en poids entre l'acide caprylique et l'albumine est nécessaire pour précipiter toute l'albumine et la transferrine. Le diagramme de la figure 6 montre par contre qu'un rapport 1 en poids entre l'acide caprylique et l'albumine est suffisant pour précipiter totalement l'alpha 2 macroglobuline (pourcentage de précipitation porté en ordonnée). Le diagramme de la figure 7 illustre la variation du pourcentage de protéines non précipitées, c'est-à-dire de protéines présentes dans le surnageant, porté en ordonnée en fonction du rapport en poids entre l'acide caprylique et l'albumine (c8/alb) porté en abscisse. Les courbes a,b,c et d correspondent respectivement à l'albumine et aux immunoglobulines M,A et G. Ces essais ont été effectués à une température de 22°C, avec un pH de 4,8 et un temps de maturation de 10 minutes.

Les essais ont par ailleurs montré que l'on obtient la même sélectivité de la précipitation en utilisant des acides gras autres que l'acide caprylique, tels que l'acide hexanoïque (c6) et l'acide nonaoïque (c9). La précipitation de l'albumine, en utilisant ces acides gras, est complète après 5 minutes de mise en contact. Toutefois, comme le rendement d'extraction des immunoglobulines G est plus faible en présence d'acide hexanoïque et que la resolubilisation de l'albumine est plus faible en présence d'acide nonaoïque (67%) que dans le cas où l'on utilise de l'acide caprylique (80%), on préfère, pour ces raisons, utiliser comme agent précipitant l'acide caprylique.

On a constaté également, au cours des divers essais effectués, que l'on obtient une sélectivité de la précipi tation identique pour un pH compris entre 4 et 4,8. Par contre pour un pH de 5,5 on observe un rendement d'extraction des immunoglobulines G plus faible.

La précipitation peut s effectuer sans perdre de sélectivité dans une gamme de température comprise entre 17°C et 30°C Si on effectue la précipitation à une tempéra ture inférieure à 17°C on introduit de l'albumine dans le surnageant (1% à 14°C) et si la température utilisée est supérieure à 30°C, on dénature les immunoglobulines.

On a appliqué également le procédé suivant l'invention à la précipitation, au moyen d'acide caprylique, de protéines extraites à partir de tourteaux de soja. Dans ce cas on extrait les protéines du soja au moyen d'une solution de chlorure de sodium (0,5M) dans un rapport 1/10 en poids, à une température de 45°C pendant 1 heure avec un pH de 8,5. La concentration en protéines totales que l'on a obtenue avec une telle extraction, est de 10,50g/l. On procède ensuite à une première précipitation des protéines du soja par changement de pH, en ajustant la solution de protéines à un pH de 4,80 en ajoutant de l'acide acétique. Après un tel ajustement du pH à 4,8 on obtient une concentration totale en protéines de 8,75g/l, ce qui correspond à un rendement de précipitation de 17%. On voit que cette précipitation à l'acide ne précipite qu'une faible partie des protéines totales contenues dans l'extrait.

Par contre on a procédé à une deuxième précipitation, suivant l'invention, par complexation des protéines avec de l'acide caprylique, en ajoutant un volume de solution de protéines à un pH de 4,80, par l'intermédiaire de l'hydroclone 12a, le volume d'émulsion contenant l'agent complexant dispersé. Le rapport des concentrations complexant-protéines, exprimées en g/g, étant fixé à 2,2, on a alors obtenu une concentration totale en protéines dans le surnageant caprylique, à pH =4,8, égale à 2,70 g/l, soit un rendement de précipitation à l'acide caprylique de 69%.

On a procédé à un essai similaire sur des protéines extraites à partir de tourteaux de colza. Les protéines du colza sont extraites par une solution de chlorure de calcium (0,05M) dans un rapport 1/10 en poids, à une température de 50°C, pendant 30min avec un pH égal à 10. On a ajusté ensuite la solution protéique à un pH de 4,8, par ajout d'acide acétique, et on n'a constaté aucune précipitation des protéines du colza à la suite du changement de pH. On a procédé également à une complexation des protéines avec de l'acide caprylique, dans les mêmes conditions que dans le cas de l'exemple décrit précédemment relatif aux protéines de soja. Dans ce cas la concentration en protéines totales après extraction, avec un pH de 10, était de 12,50g/l et cette concentration dans le surnageant caprylique, avec un pH de 4,8, est tombée à 4,50g/l ce qui se traduit par un rendement de précipitation à l'acide caprylique de 64%.

**Revendications**

1.- Procédé de fractionnement en continu de protéines végétales, animales ou humaines par précipitation selective des protéines résultant de la mise en contact d'une solution de protéines avec un agent précipitant constitué par un acide gras de 6 à 14 atomes de carbone, tel que l'acide caprylique, caractérisé en ce qu'on met en contact, d'une manière continue, des débits respectifs d'acide gras et de la solution de protéines dans une chambre de mélange 12a de volume faible par rapport aux débits, en créant une forte agitation dans cette chambre de mélange, on ajuste les débits individuels d'acide gras et de solution de protéines à pH et température contrôlés de manière à maintenir leur rapport égal à une valeur prédéterminée, on laisse le mélange évoluer ensuite pendant une phase de maturation de manière à former une suspension, on sépare cette suspension en une partie liquide dont on extrait les protéines restées solubles, et en une partie solide contenant des protéines de nature différente, et on contrôle en permanence les paramètres intervenant dans le procédé, tels que le débit, la pression, la température, le pH, la résistivité.

2.- Procédé suivant la revendication 1 caractérisé en ce qu'on sépare la suspension par filtration pour obtenir un filtrat et un rétentat.

3.- Procédé suivant la revendication 2 caractérisé en ce qu'on solubilise le rétentat avant d'en extraire sélectivement les protéines qu'il contient.

4.- Procédé suivant la revendication 1 caractérisé en ce qu'on sépare la suspension par centrifugation pour obtenir un surnageant et un précipité.

5.- Procédé suivant l'une quelconque des revendications précédentes caractérisé en ce qu'on forme en continu une émulsion de l'acide gras dans un tampon et on met en contact cette émulsion avec la solution de protéines pour provoquer la précipitation des protéines.

6.- Procédé suivant l'une quelconque des revendications précédentes caractérisé en ce qu'on fait varier la teneur en acide gras en fonction des protéines que l'on veut faire précipiter.

7.- Installation de fractionnement en continu de protéines par précipitation sélective des protéines résultant de la mise en contact d'une solution de protéines avec un acide gras de 6 à 14 atomes de carbone, tel que l'acide caprylique, caractérisée en ce qu'elle comprend un dispositif (12) de mise en contact continu de la solution de protéines et de l'acide gras, ce dispositif (12) comportant une chambre de mélange (12a) de volume faible par rapport aux débits de la solution de protéines et d'acide gras, chambre dans laquelle est créée une forte agitation favorisant la mise en contact, ce dispositif étant relié à des récipients contenant respectivement la solution de protéines et l'acide gras, par des canalisations sur lesquelles sont branchées des pompes doseuses, et une chambre de maturation (12b) reliée à la sortie de la chambre de mélange (12a), un étage de séparation solide/liquide (17) relié à la sortie de la chambre de maturation (12b), par l'intermédiaire d'un circuit comprenant au moins une pompe (13,15), un étage (22) de concentration, par ultrafiltration, du liquide sortant de l'étage de séparation (17), et un dispositif de commande (47) relié à des capteurs de débit (6,9 14,16,23), de pression (19,21,24) et à d'autres capteurs et commandant les pompes assurant la mise en circulation des différents flux liquides de manière à maintenir toujours la même proportion des débits élémentaires.

8.- Installation suivant la revendication 7 caractérisée en ce qu'elle comporte un homogénéiseur (11) relié, par des circuits comportant des pompes (5,8), au récipient (4) contenant l'acide gras et à un récipient (7) contenant un tampon, la sortie de l'homogénéiseur (11) étant reliée au dispositif de mise en contact continu (12) de manière à mettre en contact en continu, dans ce dispositif, l'émulsion d'acide gras dans le tampon, fournie par l'homogénéiseur (11), et la solution de protéines provenant du récipient (1).

9.- Installation suivant l'une quelconque des revendications 7 et 8 caractérisée en ce qu'elle comporte un solubiliseur (34) qui est relié à la sortie de l'étage de séparation (17) fournissant le rétentat et également à un récipient (35) contenant un milieu solubilisateur, par une canalisation sur laquelle est branchée une pompe doseuse (36) de débit variable en fonction de données mesurées par un capteur (37).

10.- Installation suivant la revendication 9 caractérisée en ce qu'elle comporte, à la sortie du solubiliseur (34), un étage de clarification (38) branché entre la sortie du solubiliseur (34) et un second étage (39) de concentration par ultrafiltration fournissant à sa sortie une protéine concentrée.

11.- Installation suivant la revendication 9 caractérisée en ce qu'elle comporte une unité de microfiltration (43) branchée entre la sortie du solubiliseur (34) qui ne solubilise alors que partiellement le précipité, et le second étage (39) de concentration par ultrafiltration.

12.- Installation suivant l'une quelconque des revendications 9 à 11 caractérisée en ce qu'elle comporte, entre l'étage de séparation (17) et le solubiliseur (34), au moins une unité de microfiltration et de lavage (28) dont la sortie du filtrat est reliée au premier étage (22) de concentration.

13.- Installation suivant l'une quelconque des re vendications 10 à 12 caractérisée en ce qu'elle comporte un circuit s'étendant entre les deux étages de concentration (22,39) et le récipient (4) contenant l'acide gras et une pompe (42) branchée sur ce circuit pour transmettre au récipient (4) l'acide gras récupéré à partir des deux étages de concentration (22,39).

14.- Installation suivant l'une quelconque des revendications 7 à 13 caractérisée en ce que la chambre de mélange (12a) fait partie d'un hydroclone (48) comprenant un corps (49) dans la partie centrale duquel est ménagée la chambre de mélange verticale (12a) de forme cylindrique et de petit diamètre et dans la partie supérieure de laquelle débouchent tangentiellement deux orifices d'entrée opposés à savoir un orifice d'entrée (51) pour la solution de protéines et un orifice d'entrée (53) pour l'agent précipitant.

Fig. 1

Fig. 2

Fig. 3

Fig. 4

Fig. 5

Fig. 6

Fig. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | PREPARATIVE BIOCHEMISTRY, vol. 14, no. 1, 1984, pages 1-17, Marcel Dekker, Inc.; A.F.S.A. HABEEB et al.: "Preparation of human immunoglobulin by caprylic acid precipitation" * Pages 1-3 * | 1-5 | A 23 J 1/00 |
| A | METHODS OF PLASMA PROTEIN FRACTIONATION, pages 33-56, Academic Press, Londres, GB; M. STEINBUCH: "Protein fractionation by ammonium sulphate, rivanol and caprylic acid precipitation" * Pages 47-49 * | 1 | |
| A | EP-A-0 210 109 (ASSOCIATION POUR LA RECHERCHE ET LE DEVELOPPEMENT DES METHODES ET PROCESSUS INDUSTRIELS ARMINES) * Revendications 1,5 * | 1 | |

DOMAINES TECHNIQUES RECHERCHES (Int. Cl.4)

A 23 J

Le présent rapport a été établi pour toutes les revendications

| Lieu de la recherche | Date d'achèvement de la recherche | Examinateur |
|---|---|---|
| LA HAYE | 08-09-1989 | SANTOS Y DIAZ A.I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)